# EUROPÄISCHE PATENTANMELDUNG

(11) **EP 2 096 396 A2**
(43) Veröffentlichungstag der Anmeldung: **02.09.2009**
(21) Anmeldenummer: 09153885.0
(22) Anmeldetag: 27.02.2009
(51) Int. Cl.: F28D 9/00, F28F 9/02, F24F 12/00

(54) **Wärmeübertrager für fluide Medien**

(30) Priorität: 29.02.2008 DE 102008011970
(71) Anmelder: Hochschule Bremen, 28199 Bremen (DE)
(72) Erfinder: Strauß, Rolf-Peter, Prof. Dr.-Ing., 28215 Bremen (DE)
(74) Vertreter: Tappe, Udo

(57) **Zusammenfassung**

Bei einem Wärmeübertrager für fluide Medien, insbesondere Luft, mit in Erstreckungsrichtung wechselweise aufeinander folgenden und quer zur Erstreckungsrichtung angeordneten Kanälen (19, 20) für ein erstes Strömungssystem und ein zweites Strömungssystem, wobei die Kanäle (19, 20) durch mäanderförmiges Verhalten eines flächigen Materiales (18) ausgebildet sind, mit einer Randabdeckung (17) im Bereich der Faltenkanten, und mit einer Zentralabdeckung (14) im mittleren Bereich der Faltensättel, wobei die Medienzufuhr der Strömungssysteme quer zu den Kanälen (19, 20) erfolgt, lässt sich eine gute Wärmeübertragung bei gleichzeitig hohem Durchfluss des fluiden Mediums und geringem Platzbedarf für den Einbau des Wärmeüberträgers dadurch erreichen, dass die Medienzufuhr der Strömungssysteme parallel zur Erstreckungsrichtung erfolgt.

## Beschreibung

Die Erfindung betrifft einen Wärmerübertrager für fluide Medien, insbesondere Luft, mit in Erstreckungsrichtung wechselweise aufeinander folgenden Kanälen für ein erstes Strömungssystem und ein zweites Strömungssystem, wobei die Kanäle durch mäanderförmiges Falten eines flächigen Materiales ausgebildet sind, mit einer Randabdeckung im Bereich der Faltenkanten, und mit einer Zentralabdeckung im mittleren Bereich der Faltensättel, wobei die Medienzufuhr der Strömungssysteme quer zu den Kanälen erfolgt.

Ein derartiger Wärmeübertrager ist beispielsweise aus der DE 35 02 972 A1 bekannt. Da für eine gute Wärmeübertragung Kanäle mit geringen Kanalhöhen oder geringe Strömungsgeschwindigkeiten erforderlich sind, müssen zum Erzielen eines hohen Flusses viele Kanäle parallel geschaltet werden. Bei konventionellen Plattenwärmetauschern müssen die einzelnen Platten in den Randbereichen dicht miteinander verbunden werden. Hierbei tritt häufig Undichtigkeit auf, was zu unerwünschten Wärmeverlusten führt. Bei dem bekannten Wärmeübertrager ist eine Vielzahl von Kanten bereits dadurch gut abgedichtet, dass das flächige Material mäanderförmig gefaltet wird und im Bereich der Faltensättel somit automatisch eine dichte Ausführung erfolgt. Die Anströmung erfolgt bei dem bekannten Wärmeübertrager quer zu den einzelnen Kanälen und quer zur Erstreckungsrichtung des Wärmeübertragers. Auf diese Weise lässt sich ein Wärmeübertrager mit einer Vielzahl Strömungskanälen schaffen, die jeweils gleichmäßig angeströmt werden. Nachteilig bei dem bekannten Wärmeübertrager ist, dass eine große Anzahl Kanäle einen großen Querschnitt des Strömungssystems an der Stelle des Wärmeübertragers erforderlich macht. Dies führt zu einem großen Platzbedarf und limitiert darüber hinaus trotzdem wieder die Anzahl verwendbarer Kanäle im Wärmeübertrager.

Das der Erfindung zugrunde liegende Problem ist es, einen Wärmeübertrager anzugeben, mit dem sich eine gute Wärmeübertragung bei gleichzeitig hohem Durchfluss des fluiden Mediums und geringem Platzbedarf für den Einbau des Wärmeübertragers ergibt.

Das Problem wird dadurch gelöst, dass bei einem Wärmeübertrager der eingangs genannten Art die Medienzufuhr der Strömungssysteme parallel zur Erstreckungsrichtung erfolgt.

Auf diese Weise kann ein Wärmeübertrager mit einer Vielzahl dünner Kanäle quasi längs in den Strömungskanälen des Strömungssystems angeordnet werden. Die Strömungskanäle des Strömungssystems müssen dazu im Querschnitt nicht erweitert werden. Da der Ort der Anordnung des Wärmeübertragers nahezu beliebig ist, lässt sich praktisch immer ein Strömungskanalstück mit geeigneter Länge finden.

Eine Weiterbildung der Erfindung zeichnet sich dadurch aus, dass die Medienzufuhr mittels eines Strömungsverteilers erfolgt, dessen Querschnitt abhängig vom Gesamtquerschnitt der zu versorgenden Kanäle zuführseitig in Stromrichtung abnimmt und abfuhrseitig in Stromrichtung zunimmt. Auf diese Weise lässt sich gewährleisten, dass alle Kanäle des Wärmeübertrager gleichmäßig genutzt werden, wodurch sich eine optimale Wärmeübertragung ergibt. Der Strömungsverteiler kann beispielsweise eine schräge Trennwand im Bereich der Zentralabdeckung aufweisen. Mittels dieser schrägen Trennwand kann der Querschnitt des Strömungsverteilers fortschreitend nach Abzweigen einzelner Kanäle zufuhrseitig immer weiter verjüngt bzw. abfuhrseitig bei Einmünden der Kanäle immer weiter erweitert werden. Außerdem lässt sich auf diese Weise mit einer einzelnen schrägen Trennwand ein Kanalabschnitt sowohl zufuhrseitig als auch abfuhrseitig an den entsprechenden Querschnitt der Kanäle anpassen.

Vorzugsweise sollten kleine Kanaldicken verwendet werden. Beispielsweise lässt sich mit der halben Kanaldicke der gleiche Wirkungsgrad und der gleiche Druckverlust mit einem Viertel des Volumenbedarfs für den Wärmeübertrager erreichen. Für Luft sollte eine Kanaldicke kleiner 1,5 mm und für Wasser kleiner 0,5 mm gewählt werden.

Eine andere Weiterbildung der Erfindung zeichnet sich dadurch aus, dass die Kanäle parallel zueinander angeordnet sind. Diese parallele Anordnung ermöglicht eine einfache und geometrisch leicht beherrschbare Konstruktion. Vorzugsweise werden die Kanäle im Gegenstrom betrieben. Auf diese Weise lässt sich ein möglichst guter Übertrag der Wärme erzielen.

Eine vorteilhafte Ausführungsform der Erfindung ist dadurch gekennzeichnet, dass die Kanäle einen derartigen Querschnitt haben, dass für verschiedene Stromlinien ein gleicher Druckverlust erreicht wird. Auf diese Weise lässt sich eine Verschlechterung des Wirkungsgrades des Wärmeübertragers durch einen unterschiedlichen Eintrittsort der Stromlinien in die Kanäle verhindern, da kurzen Strömungswegen und damit einer geringen Aufenthaltszeit in dem Kanal eine geringe Kanaldicke und langen Strömungswegen in dem Kanal, das heißt, einer hohen Aufenthaltsdauer eine große Kanaldicke zugeordnet ist. Beispielsweise können hierzu die Kanäle am geschlossenen Ende im Bereich der Faltensättel eine größere Breite als am offenen Ende haben. Es ist aber auch möglich, Mittel zum Erzielen des gewünschten Druckverlustes vorzusehen. Diese Mittel können beispielsweise Einbauten oder Profile sein.

Bei einer anderen Ausgestaltung der Erfindung weist das flächige Material eine schlechte Wärmeleitung auf. Auf diese Weise wird gewährleistet, dass eine Wärmeübertragung zwischen den fluiden Medien in zwei benachbarten Kanälen erfolgt. Eine Verschlechterung der Wärmeübertragung durch eine ungewollte Längsleitung entlang des flächigen Materials wird so verhindert. Es ist dabei von Vorteil, wenn das flächige Material eine geringe Dicke aufweist und insbesondere eine Folie ist. Derartig dünne Materialien und insbesondere Folien, beispielsweise aus einem geeigneten Kunstharzmaterial, haben eine geringe Wärmeleitung.

Das flächige Material kann aus Blech, Kupfer, Aluminium, Edelstahl, Kunststoff, Stoff oder Papier bestehen oder mehrlagig daraus ausgebildet sein. Die genannten Materialien lassen sich einfach als Endlosmaterial verarbeiten und haben bei geeigneter Auswahl die gewünschten Eigenschaften für einen Wärmeübertrager. Es ist auch möglich, für das flächige Material ein mediendurchlässiges Material, beispielsweise eine semipermeable Membran zu verwenden. Eine andere vorteilhafte Ausführungsform ergibt sich bei einer Beschichtung des flächigen Materiales mit einer hydrophoben Schicht.

Eine vorteilhafte Ausgestaltung der Erfindung ergibt sich durch Abstandshalter für einen definierten Abstand der Kanalwände voneinander. Auf diese Weise wird sichergestellt, dass die einzelnen Kanäle ähnliche Charakteristika haben und dass das Gesamtergebnis des Wärmeübertragers nicht durch einzelne schlecht funktionierende Kanäle negativ beeinflusst wird. Als Abstandshalter kann das flächige Material beispielsweise eine Prägung aufweisen. Diese Ausgestaltung ist technische besonders einfach herstellbar.

Bei einer vorteilhaften Ausführungsform ist vorgesehen, dass die Randabdeckungen, die Zentralabdeckungen und/oder ggf. vorhandene stirnseitige Abdeckungen als Gehäuseplatten ausgebildet sind oder aus Selbstklebefolie bestehen. Die Gehäuseplatten können miteinander und/oder mit dem Faltenpaket verlötet sein. Dadurch ergibt sich eine stabile, auch für Flüssigkeiten besonders geeignete Ausführungsform. Auf diese Weise ergibt sich ein robuster und montagefreundlicher Aufbau und insbesondere bei der Ausführung mit der Selbstklebefolie ein geringer Materialbedarf und ein einfacher Aufbau des Wärmeübertragers.

Vorzugsweise zeichnet sich eine Weiterbildung der Erfindung durch eine Anordnung in einem Strömungskanal aus, wobei die Kanäle quer zu dem Strömungskanal angeordnet sind. Diese Anordnung macht die Montage, den Aufbau und den Teilebedarf des Strömungssystems besonders einfach, wobei gleichzeitig nur ein geringer Platzbedarf besteht. Vorzugsweise kann eine Anordnung des Wärmeübertragers in einem Schalldämpfergehäuse vorgesehen sein. Da Wärmerückgewinnungssysteme in Niedrigenergiehäusern generell Schalldämpfer aufweisen, um die Lärmbelästigung zu reduzieren, bietet sich hier eine Anordnung des Wärmeübertragers in dem Schalldämpfergehäuse geradezu an. Zum einen ist hier eine einfache Montage möglich und zum anderen wirkt der Wärmeübertrager bereits als Schalldämpfer, so dass hier ein überaus erwünschter Zusatzeffekt entsteht.

Eine andere Weiterbildung der Erfindung betrifft einen Wärmeübertrager mit einem Strömungsanschluss zum Anschließen an das erste und/oder das zweite Strömungssystem. Mittels eines derartigen Strömungsanschlusses lässt sich der Wärmeübertrager einfach an die Strömungssysteme anschließen, ohne dass hierbei eine Fehlschaltung der einzelnen Kanäle möglich ist. Vorzugsweise weist der Strömungsanschluss dabei einen schräg zur Erstreckungsrichtung verlaufenden Kanalabschnitt auf. Auf diese Weise lassen sich die Strömungssysteme einfach von einander trennen. Dies ist insbesondere dann der Fall, wenn der dem ersten Strömungssystem zugeordnete Kanalabschnitt quer zu dem dem zweiten Strömungssystem zugeordneten Kanalabschnitt verläuft.

Besonders vorteilhaft bei dem Wärmeübertrager mit den Erfindungsmerkmalen ist, dass sich ein Wärmeübertragermodulsystem mit mehreren modular aufgebauten Wärmeübertragern herstellen lässt. Auf diese Weise lässt sich durch parallel oder wahlweise in Reihe Schalten von mehreren Wärmeübertragern ein Gesamtwärmeübertrager mit der gewünschten Charakteristik bei geringem Platzbedarf und hohem Wirkungsgrad erstellen. Schließlich ist zu berücksichtigen, dass der Raumbedarf des Wärmeübertragers umso kleiner ist, je kleiner die Kanaldicke ist, dass aber im Gegenzug mit kleinerer Kanaldicke die erforderliche Kanalanzahl steigt.

Besonders vorteilhaft lässt sich der erfindungsgemäße Wärmeübertrager für ein Wärmerückgewinnungssystem einer Lüftungsanlage nutzen. Hier kann der Platzbedarf bei einem Neubau erheblich reduziert werden. Beispielsweise kann ein derartiger Wärmeübertrager im Bereich einer abgehängten Decke angeordnet werden, ohne dass hier der Zwischendeckenbereich besonders groß zu sein braucht. Außerdem lässt sich durch den geringen Raumbedarf ein derartiger Wärmeübertrager auch einfach bei der energetischen Sanierung von Altbauten einsetzen.

Ein weiterer Aspekt der Erfindung betrifft ein Verfahren zum Herstellen eines Wärmeübertragers mit den Erfindungsmerkmalen, bei dem ein flächiges Endlosmaterial in einer ersten Heizstation zum plastischen Verformen erwärmt wird, das Endlosmaterial in einer Prägestation mittels zweier gegenläufig rotierender Walzen mit einer Prägung als Abstandshalter versehen wird, das Endlosmaterial in einer zweiten Heizstation zum plastischen Verformen erwärmt wird, das Endlosmaterial in einer Faltstation in einander benachbarte Falten angeordnet wird, und bei dem das flächige Material auf die gewünschte Faltenanzahl abgelängt wird.

Auf diese Weise lässt sich besonders einfach ein Wärmeübertrager mit den gewünschten Eigenschaften herstellen. Es ist nach den genannten Schritten lediglich noch erforderlich, gegebenenfalls Randabdeckungen, Stirnabdeckungen und Zentralabdeckungen vorzusehen. Bei der Verwendung von selbstklebender Folie ist dieser weitere Verfahrensschritt besonders einfach durchzuführen.

Nachfolgend werden Ausführungsbeispiele der Erfindung anhand der Zeichnungen näher erläutert. Es zeigen:
Fig. 1 eine perspektivische Schemadarstellung eines Wärmeübertragers mit den Erfindungsmerkmalen,
Fig. 2 eine perspektivische Teildarstellung des Wärmeübertragers mit abgenommenem Gehäuse,
Fig. 3 eine schematische Teildarstellung eines Faltenpakets des Wärmeübertragers,
Fig. 4 eine schematische Darstellung zur Veranschaulichung unterschiedlicher Strömungswege,
Fig. 5 eine Darstellung eines Faltenpakets mit an die Stromlinienlänge angepasster Kanaldecke,
Fig. 6 eine schematische Darstellung der Anordnung eines Wärmeübertragers mit den Erfindungsmerkmalen in einem Schalldämpfergehäuse,
Fig. 7 eine perspektivische Darstellung der Parallelschaltung mehrerer Wärmeübertrager mit den Erfindungsmerkmalen,
Fig. 8 eine schematische Darstellung einer Vorrichtung zum Herstellen eines Wärmeübertragers mit den Erfindungsmerkmalen, und
Fig. 9 ein modular erweiterbares Wärmeübertragerpaket.

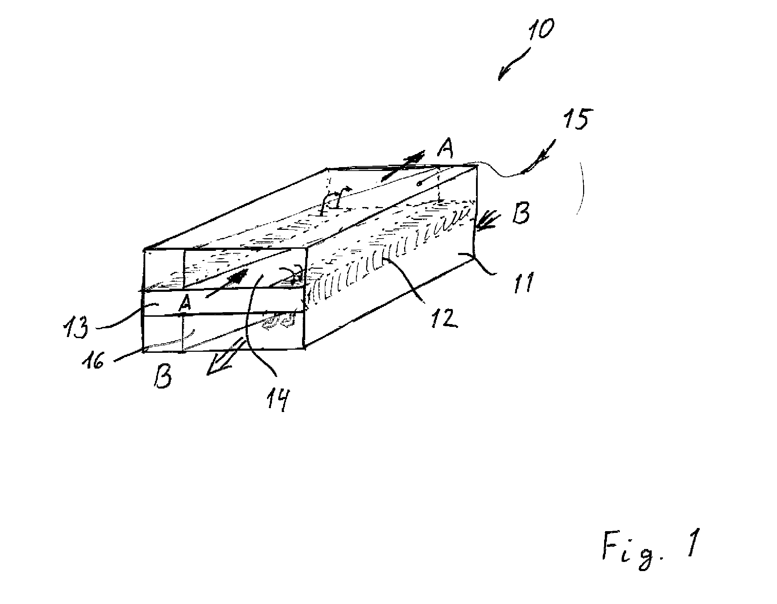

Fig. 1 zeigt eine perspektivische Schemadarstellung eines Wärmeübertragers 10 mit den Erfindungsmerkmalen. Wie sich der Figur entnehmen lässt, ist der Wärmeübertrager 10 in einem Strömungskanal 11 angeordnet. Dabei weist der Wärmeübertrager 10 ein Faltenpaket 12 auf, das stirnseitig mit Abdeckungen 13 versehen ist, von denen in der Figur nur eine Abdeckung 13 zu sehen ist.

Wie sich der Figur weiter entnehmen lässt, sind im mittleren Bereich der Faltensättel Zentralabdeckungen 14 vorgesehen, von denen in der Figur wieder nur eine Zentralabdeckung 14 zu sehen ist. Im Bereich der Zentralabdeckungen 14 sind wiederum Strömungsverteiler 15, 16 zum gleichmäßigen Anströmen der Kanäle des Faltenpaketes 12 vorgesehen. Bei dem gezeigten Ausführungsbeispiel sind die Strömungsverteiler als Trennwände 15, 16 vorgesehen, die im Bereich der Zentralabdeckungen 14 verlaufen und schräg zu dem Faltenpaket 12 angeordnet sind.

Wie sich der Figur entnehmen lässt, strömt ein erstes Fluid A auf der Oberseite des Wärmeübertragers 10 in den Strömungskanal 11 ein und wird dabei von der Trennwand 15 zu den Kanälen des Faltenpaketes 12 geleitet. Dabei nimmt der durch die Trennwand 15 und die Außenwände des Strömungskanales 11 gebildete Strömungsverteiler vom Querschnitt her in Stromrichtung immer weiter ab, je mehr Kanäle des Faltenpaketes 12 bereits angeströmt worden sind. Das Fluid A strömt sodann durch die Kanäle des Faltenpaketes 12 und tritt auf der Rückseite der Trennwand 15 wieder aus den Kanälen aus, wobei sich der durch die Trennwand 15 und die Wände des Strömungskanales 11 gebildete Querschnitt wiederum umso mehr erweitert, je mehr Kanäle in den so gebildeten Strömungsverteiler eingemündet sind. Auf ähnliche Weise strömt ein zweites Fluid B auf der Unterseite des Wärmeübertragers 10 in Kanäle des Faltenpaketes 12 ein, tritt durch diese Kanäle hindurch und strömt am abgewandten Ende der Kanäle aus diesen aus und wird, wie durch einen Pfeil B angedeutet, aus dem Wärmeübertrager geleitet. Gleichfalls wird durch die Trennwand 16 und das Gehäuse des Strömungskanales 11 wiederum zufuhrseitig und abfuhrseitig jeweils ein Strömungsverteiler gebildet, dessen Querschnitt abhängig von den noch zu bedienenden Kanälen zufuhrseitig sich immer mehr verjüngt und abhängig von den bereits eingemündeten Kanälen sich abfuhrseitig immer mehr erweitert. Auf diese Weise werden die Fluide A, B in den Kanälen im Gegenstromverfahren an einander vorbeigeleitet, so dass ein guter Wärmeübergang vom Fluid A auf das Fluid B oder umgekehrt möglich ist.

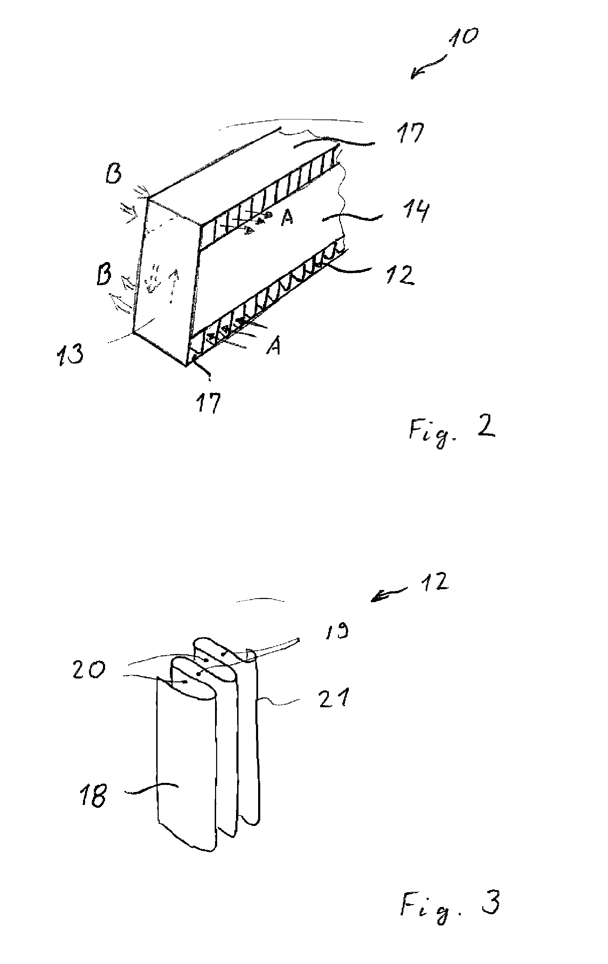

Fig. 2 zeigt eine schematische Teildarstellung des Wärmeübertragers 10 von Fig. 1 mit abgenommenem Strömungskanal 11 und abgenommenen Trennwänden 15, 16. Wie sich der Figur entnehmen lässt, ist das Faltenpaket im Bereich seiner Faltenkanten mit Randabdeckungen 17 versehen. Deutlich zu sehen ist die Zentralabdeckung 14 im mittleren Bereich der Faltensättel. Wie sich der Figur außerdem entnehmen lässt, wird auf diese Weise eine Zufuhr bzw. Abfuhr der Fluide A, B im unteren bzw. oberen Bereich der jeweiligen Faltensättel gewährleistet.

Fig. 3 zeigt eine schematische Teilansicht eines Faltenpaketes 12. Das Faltenpaket 12 besteht aus einem flächigen Material 18, im vorliegenden Fall einer Kunststofffolie 18. Wie sich der Figur entnehmen lässt, werden auf einander folgend und parallel zueinander durch das flächige Material 18 Kanäle 19, 20 gebildet, wobei die Kanäle 19 bei der Orientierung von Fig. 2 dem Fluid A und die Kanäle 20 dem Fluid B zugeordnet wären. Wie sich der Figur außerdem entnehmen lässt, wird das Faltenpaket 12 seitlich von den Faltensätteln 21 begrenzt.

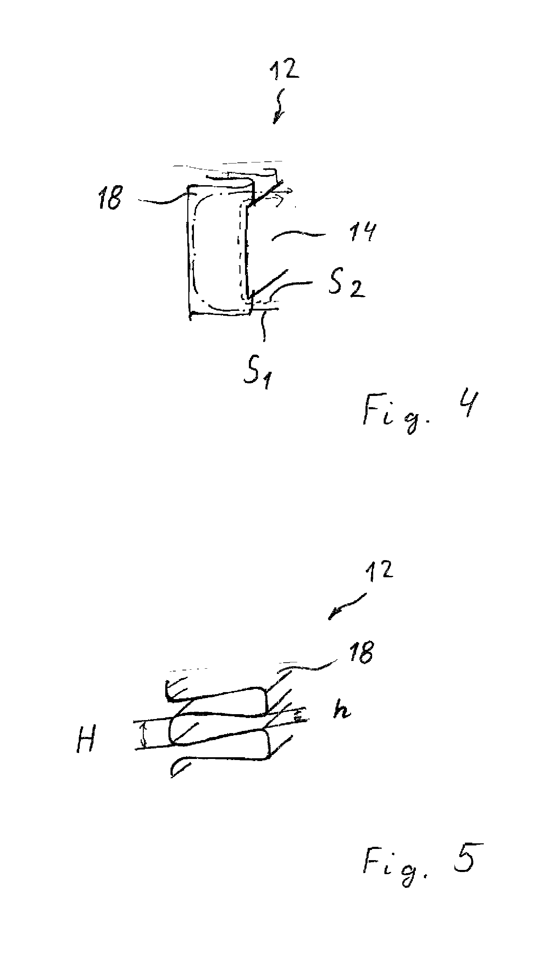

Fig. 4 zeigt, dass bei einer wirbelfreien Strömung ein unterschiedlicher Eintrittsort in den jeweiligen Strömungskanal eine unterschiedlich lange Strömungslinie im Bereich des jeweiligen Kanals zur Folge hat. Im Einzelnen sind zwei Strömungslinien S₁ bzw. S₂ gezeigt, wobei die Strömungslinie S₁ weiter außen in den Kanal eintritt als die Strömungslinie S₂. Wie sich der Figur entnehmen lässt, ist die Strömungslinie S₁ wesentlich länger als die Strömungslinie S₂. Damit dies nicht zu einer inhomogenen Verteilung des Massenstromes der Fluide A, B führt, was wiederum den Wirkungsgrad des Wärmeübertragers 10 verschlechtern würde, lassen sich die Abstände der Trennwände, also die Kanaldecke quer zur Strömungsrichtung anpassen. Die Kanaldicke wird dabei vorteilhaft so gewählt, dass für alle Stromlinien immer der gleiche Druckverlust auftritt.

Fig. 5 zeigt eine Ausgestaltung des Faltenpaketes, bei der die Kanaldicke h dort, wo die Stromlinien kürzer sind, entsprechend kleiner ist und bei dem die Kanaldicke H dort, wo die Stromlinien länger sind, entsprechend größer ist. Alternativ oder zusätzlich zu dieser Dickenanpassung kann der Druckverlust aber auch geometrisch beispielsweise durch Einbauten oder Profile erzielt werden. Die gewünschten Kanalhöhen h und H lassen sich beispielsweise durch eine Prägung des flächigen Materiales 18 erreichen.

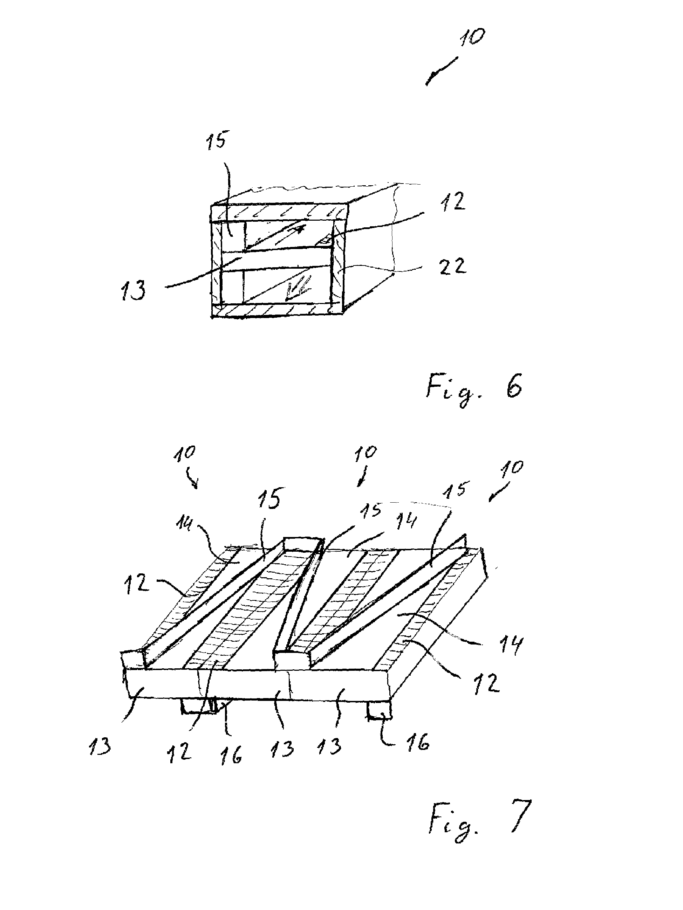

Fig. 6 zeigt eine schematische Darstellung einer weiteren Einbauvariante des Wärmeübertragers 10. Wie sich der Figur entnehmen lässt, ist der Wärmeübertrager 10 bei dem gezeigten Ausführungsbeispiel in ein Schalldämpfergehäuse 22 integriert. Auf diese Weise lässt sich mit dem Wärmeübertrager 10 neben der Wärmeübertragung auch eine Reduzierung der Geräuschemission erreichen.

Fig. 7 zeigt den modularen Aufbau eines Wärmeübertrages für großen Fluss aus mehreren Wärmeübertragern 10. Dabei sind die einzelnen Wärmeübertrager 10 einander jeweils parallel geschaltet. Bei Einbau in einen Strömungskanal mit quer zur Strömungsrichtung liegenden Kanälen des Faltenpaketes 12 ergibt sich durch die Trennwände 15, 16 jeweils eine gleichmäßige Anströmung der Kanäle.

Anstelle der Ausbildung aus mehreren getrennten Wärmeübertragern 10 ist es aber auch möglich, ein durchgehendes Faltpaket 12 mit mehreren Zentralabdeckungen 14 zu versehen. Fehlende Abschlüsse zwischen den einzelnen Wärmeübertragern 10 beeinflussen hier das Ergebnis nicht nachteilig.

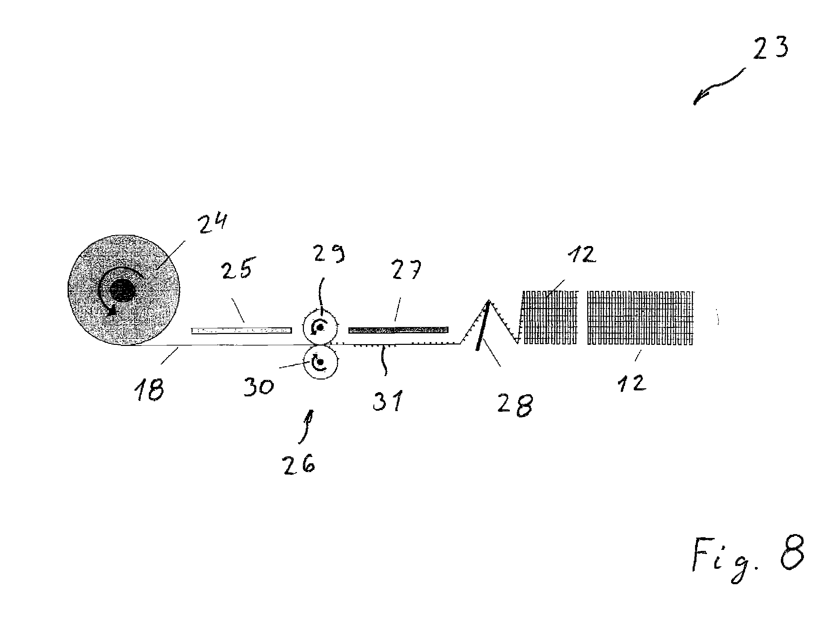

Fig. 8 zeigt eine schematische Darstellung einer Vorrichtung zur Herstellung eines Wärmeübertragers 10 mit den Erfindungsmerkmalen. Die gezeigte Fertigungsstation 23 weist einen Vorrat des flächigen Materiales 18, nämlich eine Folienrolle 24 auf. Mittels dieser Folienrolle 24 wird das flächige Material 18 zur weiteren Bearbeitung bereitgestellt. An die Folienrolle 24 schließt sich eine erste Heizstation 25, eine Prägestation 26, eine zweite Heizstation 27 und eine Faltstation 28 an. Die Prägestation 26 weist bei dem gezeigten Ausführungsbeispiel zwei gegenläufig rotierende Walzen 29, 30 auf.

Das flächige Material wird dabei von der Folienrolle 24 bereitgestellt und mittels der ersten Heizstation auf eine Temperatur zum plastischen Verformen gebracht. Diese aufgeheizte Folie wird sodann zwischen den gegenläufig rotierenden Walzen 29, 30 der Prägestation hindurch geführt, wobei Erhebungen auf den Walzen 29, 30 Prägungen auf dem flächigen Material 18 erzeugen. Das so mit den Prägungen 31 versehene flächige Material 18 wird in der zweiten Heizstation wiederum zum plastischen Verformen erhitzt und in der Faltstation 28 in gleichmäßige Falten gelegt. Die so erzeugten Faltenpakete 12 werden auf die gewünschte Länge abgelängt. Die Faltenpakete 12 können sodann mit den Abdeckungen 13, 17 und den Zentralabdeckungen 14 versehen werden. Auf diese Weise sind die Wärmeübertrager 10 fertig zum Einbau.

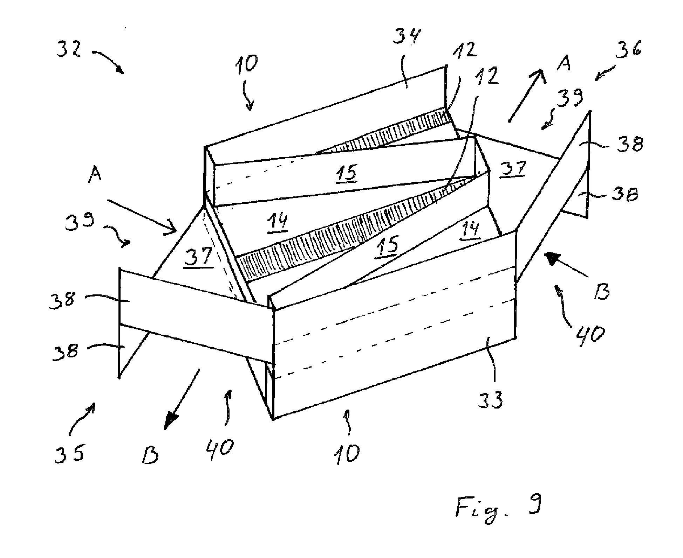

Fig. 9 zeigt ein modular erweiterbares Wärmeübertragerpaket 32 in perspektivischer Darstellung. Wie sich der Figur entnehmen lässt, hat das Wärmeübertragerpaket 32 zwei ähnlich wie in Figur 7 parallel geschaltete Wärmeübertrager 10. Das Wärmeübertragerpaket 32 weist Seitenwände 33, 34 auf. Außerdem sind in Erstreckungsrichtung an die Wärmeübertrager 10 anschließend Strömungsanschlüsse 35, 36 vorgesehen. Die Strömungsanschlüsse 35, 36 haben jeweils eine Trennwand 37 zum Trennen der Medien A, B der beiden Strömungssysteme voneinander und seitlich begrenzende Kanalwände 38. Mittels dieser Trennwände 37 und Kanalwände 38 werden Kanalabschnitte 39, 40 für die Medien A bzw. B der Strömungssysteme jeweils gebildet.

Auf diese Weise lassen sich mehrere Wärmeübertragerpakete 32 jeweils übereinanderstapeln, wodurch bei geeignetem Aufbau der Wärmeübertragerpakete 32 die Kanalabschnitte 39 bzw. 40 jeweils derart miteinander korrespondieren, dass aus zwei Kanalabschnitten 39 bzw. 40 ein Kanal zum Anschluss an das jeweilige Strömungssystem geschaffen wird. Auf diese Weise sind die Wärmeübertragerpakete 32 quasi beliebig modular erweiterbar und gleichzeitig einfach an die Strömungssysteme anschließbar.

### Bezugszeichenliste:

- 10: Wärmeübertrager
- 11: Strömungskanal
- 12: Faltenpaket
- 13: Abdeckung
- 14: Zentralabdeckung
- 15: Trennwand
- 16: Trennwand
- 17: Randabdeckung
- 18: flächiges Material
- 19: Kanal
- 20: Kanal
- 21: Faltensattel
- 22: Schalldämpfergehäuse
- 23: Fertigungsstation
- 24: Folienrolle
- 25: Heizstation
- 26: Prägestation
- 27: Heizstation
- 28: Faltstation
- 29: Walze
- 30: Walze
- 31: Prägung
- 32: Wärmeübertragerpaket
- 33: Seitenwand
- 34: Seitenwand
- 35: Strömungsanschluss
- 36: Strömungsanschluss
- 37: Trennwand
- 38: Kanalwand
- 39: Kanalabschnitt
- 40: Kanalabschnitt

## Patentansprüche

1. Wärmeübertrager für fluide Medien, insbesondere Luft, mit in Erstreckungsrichtung wechselweise aufeinander folgenden und quer zur Erstreckungsrichtung angeordneten Kanälen (19, 20) für ein erstes Strömungssystem und ein zweites Strömungssystem, wobei die Kanäle (19, 20) durch mäanderförmiges Falten eines flächigen Materiales (18) ausgebildet sind, mit einer Randabdeckung (17) im Bereich der Faltenkanten, und mit einer Zentralabdeckung (14) im mittleren Bereich der Faltensättel, wobei die Medienzufuhr der Strömungssysteme quer zu den Kanälen (19, 20) erfolgt, **dadurch gekennzeichnet, dass** die Medienzufuhr der Strömungssysteme parallel zur Erstreckungsrichtung erfolgt.

2. Wärmeübertrager nach Anspruch 1, **dadurch gekennzeichnet, dass** die Medienzufuhr mittels eines Strömungsverteilers erfolgt, dessen Querschnitt abhängig vom Gesamtquerschnitt der zu versorgenen Kanäle (19, 20) zufuhrseitig in Stromrichtung abnimmt und abfuhrseitig in Stromrichtung zunimmt, wobei der Strömungsverteiler vorzugsweise eine schräge Trennwand (15, 16) im Bereich der Zentralabdeckung (14) aufweist.

3. Wärmeübertrager nach einem der vorhergehenden Ansprüche, **dadurch gekennzeichnet, dass** die Kanäle (19, 20) parallel zueinander angeordnet sind.

4. Wärmeübertrager nach einem der vorhergehenden Ansprüche, **dadurch gekennzeichnet, dass** die Kanäle (19, 20) im Gegenstrom betrieben werden.

5. Wärmeübertrager nach einem der vorhergehenden Ansprüche, **dadurch gekennzeichnet, dass** die Kanäle (19, 20) einen derartigen Querschnitt haben, dass für verschiedene Stromlinien (S₁, S₂) ein gleicher Druckverlust erreicht wird, wobei vorzugsweise die Kanäle (19, 20) am geschlossenen Ende im Bereich der Faltensättel eine größere Breite (H) als am offenen Ende (h) haben, und wobei insbesondere Mittel zum Erzielen des Druckverlustes vorgesehen sind, die vorzugsweise Einbauten oder Profile sind.

6. Wärmeübertrager nach einem der vorhergehenden Ansprüche, **dadurch gekennzeichnet, dass** das flächige Material (18) eine schlechte Wärmeleitung aufweist.

7. Wärmeübertrager nach einem der vorhergehenden Ansprüche, **dadurch gekennzeichnet, dass** das flächige Material (18) eine geringe Dicke aufweist und insbesondere eine Folie ist.

8. Wärmeübertrager nach einem der vorhergehenden Ansprüche, **dadurch gekennzeichnet, dass** das flächige Material (18) aus Blech, Kupfer, Aluminium, Edelstahl, Kunststoff, Stoff oder Papier besteht oder mehrlagig daraus ausgebildet ist.

9. Wärmeübertrager nach einem der vorhergehenden Ansprüche, **gekennzeichnet durch** Abstandshalter (31) für einen definierten Abstand der Kanalwände voneinander, wobei vorzugsweise das flächige Material (18) eine Prägung (31) als Abstandshalter aufweist.

10. Wärmeübertrager nach einem der vorhergehenden Ansprüche, **dadurch gekennzeichnet, dass** die Randabdeckungen (17), die Zentralabdeckungen (14) und/oder gegebenenfalls vorhandene stirnseitige Abdeckungen (13) als Gehäuseplatten ausgebildet sind oder aus Selbstklebefolie bestehen.

11. Wärmeübertrager nach einem der vorhergehenden Ansprüche, **gekennzeichnet durch** eine Anordnung in einem Strömungskanal (11), vorzugsweise in einem Schalldämpfergehäuse (22), wobei die Kanäle (19, 20) quer zu dem Strömungskanal (11) angeordnet sind.

12. Wärmeübertrager nach einem der vorhergehenden Ansprüche, **gekennzeichnet durch** einen Strömungsanschluss (35, 36) zum Anschließen an das erste und/oder das zweite Strömungssystem, wobei vorzugsweise der Strömungsanschluss (35,36) einen schräg zur Erstreckungsrichtung verlaufenden Kanalabschnitt (39, 40) aufweist, und wobei insbesondere der dem ersten Strömungssystem zugeordnete Kanalabschnitt (39) quer zu dem dem zweiten Strömungssystem zugeordneten Kanalabschnitt (40) verläuft.

13. Wärmeübertragermodulsystem mit mehreren modular aufgebauten Wärmeübertragern (10) nach einem der vorhergehenden Ansprüche.

14. Verwendung eines Wärmeübertragers nach einem der Ansprüche 1 bis 20 für ein Wärmerückgewinnungssystem einer Lüftungsanlage.

15. Verfahren zum Herstellen eines Wärmeübertragers nach einem der Ansprüche 1 bis 17 , bei dem ein flächiges Endlosmaterial (18) in einer ersten Heizstation (25) zum plastischen Verformen erwärmt wird, das Endlosmaterial (18) in einer Prägestation (26) mittels zweier gegenläufig rotierender Walzen (29, 30) mit einer Prägung (31) als Abstandshalter versehen wird, das Endlosmaterial (18) in einer zweiten Heizstation (27) zum plastischen Verformen erwärmt wird, das Endlosmaterial (18) in einer Faltstation (28) in einander benachbarte Falten angeordnet wird, und bei dem das flächige Material (18) auf die gewünschte Faltenanzahl abgelängt wird.
